# EUROPÄISCHE PATENTSCHRIFT

(11) **EP 0 479 844 B1**
(45) Veröffentlichungstag und Bekanntmachung des Hinweises auf die Patenterteilung: **13.01.1993**
(21) Anmeldenummer: 90909706.5
(22) Anmeldetag: 21.06.1990
(51) Int. Cl.: F02B 27/02

(54) **SAUGROHRANLAGE FÜR EINE MEHRZYLINDER-BRENNKRAFTMASCHINE MIT ZWEI ZYLINDERREIHEN IN V-ANORDNUNG**
SUCTION PIPE ARRANGEMENT FOR A MULTICYLINDER INTERNAL COMBUSTION ENGINE WITH TWO BANKS OF CYLINDERS IN V FORMATION
COLLECTEUR D'ADMISSION POUR MOTEURS A COMBUSTION INTERNE A CYLINDRES MULTIPLES AYANT DEUX LIGNES DE CYLINDRES EN V

(30) Priorität: 28.06.1989 DE 3921081
(43) Veröffentlichungstag der Anmeldung: 15.04.1992
(73) Patentinhaber: AUDI AG, 85045 Ingolstadt (DE)
(72) Erfinder: MÜLLER, Robert, D-7101 Erlenbach (DE); CLOS, Richard, D-7141 Oberstenfeld (DE)
(74) Vertreter: Speidel, Eberhardt
(86) Internationale Anmeldenummer: EP9000987
(87) Internationale Veröffentlichungsnummer: WO9100419

(56) Entgegenhaltungen:
- EP-A- 177 794
- EP-A- 215 628
- EP-A- 0 201 180
- PATENT ABSTRACTS OF JAPAN Vol. 11, No. 10 (M-552)(2457) 10 January 1987, & JP-A-61 187519

## Beschreibung

### Saugrohranlage für eine Mehrzylinder-Brennkraftmaschine mit zwei Zylinderreihen in V-Anordnung

Die Erfindung bezieht sich auf eine Saugrohranlage für eine Mehrzylinder-Brennkraftmaschine mit zwei Zylinderreihen in V-Anordnung entsprechend dem Oberbegriff des Anspruchs 1.

Bei einer bekannten Saugrohranlage dieser Art (EP-A 0 201 180) ist für jede der zweiten Öffnungen ein Ventilglied in Form einer Klappe vorgesehen, die auf einer allen Klappen gemeinsamen, sich in Längsrichtung durch den Ansaugverteiler erstreckenden Welle angeordnet ist. Das Vorsehen eines eigenen Ventilgliedes für jede der zweiten Öffnungen jedes Einzelsaugrohres ergibt insbesondere bei einer Brennkraftmaschine mit einer Vielzahl von Zylindern, beispielsweise bei 6-, 8- oder 12-Zylinder-Brennkraftmaschinen eine sehr große Anzahl von Ventilklappen, die miteinander synchronisiert werden müssen und die überdies aufgrund der im Ansaugsystem auftretenden Schwingungen zum Klappern neigen.

Bei Brennkraftmaschinen mit einer Zylinderreihe ist es bekannnt (DE-A 34 33 653), den Ansaugverteilerraum mit einem kreisförmigen Querschnitt auszuführen und in diesem einen Drehschieber mit einer Austrittsöffnung pro Einzelsaugrohr vorzusehen, wobei durch Drehen des Drehschiebers eine kontinuierliche Veränderung der Schwingrohrlänge erreicht wird. Bei einer Brennkraftmaschine mit zwei V-förmig angeordneten Zylinderreihen ist diese Anordnung nicht verwendbar, da sich die Einzelsaugrohre für die eine Zylinderreihe im Uhrzeigersinn und diejenigen für die andere Zylinderreihe entgegengesetzt um den Ansaugverteilerraum erstrecken, so daß beim Drehen des Drehschiebers die Schwingrohrlänge der einen Einzelsaugrohre verlängert und diejenige der anderen Einzelsaugrohre verkürzt würde. Diese Probleme bestehen naturgemäß bei einer Klappensteuerung entsprechend der EP-A 0 201 180 nicht.

Der Erfindung liegt die Aufgabe zugrunde, eine Saugrohranlage der gattungsgemäßen Art zu schaffen, bei der die Steuerung der zweiten Öffnungen der Einzelsaugrohre mit wesentlich geringerem Aufwand erfolgt als bei der Ausführung gemäß EP-A 0 201 180, von der die Erfindung ausgeht.

Diese Aufgabe wird erfindungsgemäß durch die im Kennzeichen des Anspruchs 1 angegebenen Merkmale gelöst.

Durch die unsymmetrische Anordnung und Ausbildung der Steuerschlitze (zwei Schlitze für die Öffnungen jedes ersten Einzelsaugrohres, ein längerer Schlitz für die Öffnungen jedes zweiten Einzelsaugrohres) ist es möglich, die zweiten Öffnungen aller Einzelsaugrohre von einem einzigen Ventilglied, nämlich dem Drehschieber, zu steuern, wodurch nicht nur der Bauaufwand gegenüber dem Stand der Technik erheblich reduziert ist, sondern auch automatisch eine identische Steuerung aller zweiten Öffnungen sichergestellt ist. Abgesehen von diesen strukturellen Vorteilen wird dadurch, daß beim Umschalten des Drehschiebers von seiner ersten in seine zweite Stellung die ersten Öffnungen nicht ganz geschlossen werden, ein erhöhter Liefergrad in diesem Betriebsbereich erreicht und eine Querschnittsverengung vermieden.

Der Steuerschlitz zur Steuerung der Öffnungen des zweiten Einzelsaugrohres ist verhältnismäßig lang. Daher kann es insbesondere aus Festigkeitsgründen zweckmäßig sein, diesen durch einen Steg in zwei Teilschlitze zu unterteilen, wobei dieser Steg so anzuordnen ist, daß einer der Teilschlitze der Größe der zweiten Öffnung entspricht. Eine weitere Funktion des Steges ist es, durch die Form seines Querschnitts die Einströmung aus dem Verteilerraum in die zweite Öffnung zu optimieren.

Der Steuerschlitz, der mit beiden Öffnungen des ersten Einzelsaugrohres zusammenwirkt, kann zur Erzielung einer höheren Festigkeit ebenfalls durch einen Steg unterteilt werden. Die Lage des Steges ist dabei so gewählt, daß der freibleibende Querschnitt zur Steuerung der ersten Öffnung nicht vermindert wird. Durch entsprechende Formgebung seines Querschnitts wird die Einströmung aus dem Verteilerraum in die erste Öffnung optimiert.

Ein Ausführungsbeispiel der Erfindung wird im folgenden anhand der Zeichnungen näher erläutert. Es zeigt:
Fig. 1 einen Längsschnitt einer Saugrohranlage für eine V8-Brennkraftmaschine, wobei der Drehschieber für die Einzelsaugrohre der einen Zylinderreihe entsprechend der Linie 1a-1a in Fig. 2 und für die Einzelsaugrohre der anderen Zylinderreihe entsprechend der Linie 1b-1b in Fig. 4 geschnitten ist,
Fig. 2 einen Schnitt entlang Linie 2-2 in Fig. 1, wobei der Drehschieber in seiner ersten Stellung ist, in welcher die zweiten Öffnungen der ersten Einzelsaugrohre abgesperrt sind,
Fig. 3 einen Schnitt entsprechend Fig. 2, wobei der Drehschieber in seiner zweiten Stellung ist, in der die zweiten Öffnungen der ersten Einzelsaugrohre freigegeben sind,
Fig. 4 einen Schnitt entlang Linie 4-4 in Fig. 1, wobei der Drehschieber in der in Fig. 2 gezeigten ersten Stellung ist und die zweiten Öffnungen der zweiten Einzelsaugrohre absperrt, und
Fig. 5 einen Schnitt entsprechend Fig. 4 mit dem Drehschieber in der zweiten Stellung gemäß Fig. 3, in welcher er die zweiten Öffnungen der zweiten Einzel saugrohre freigibt.

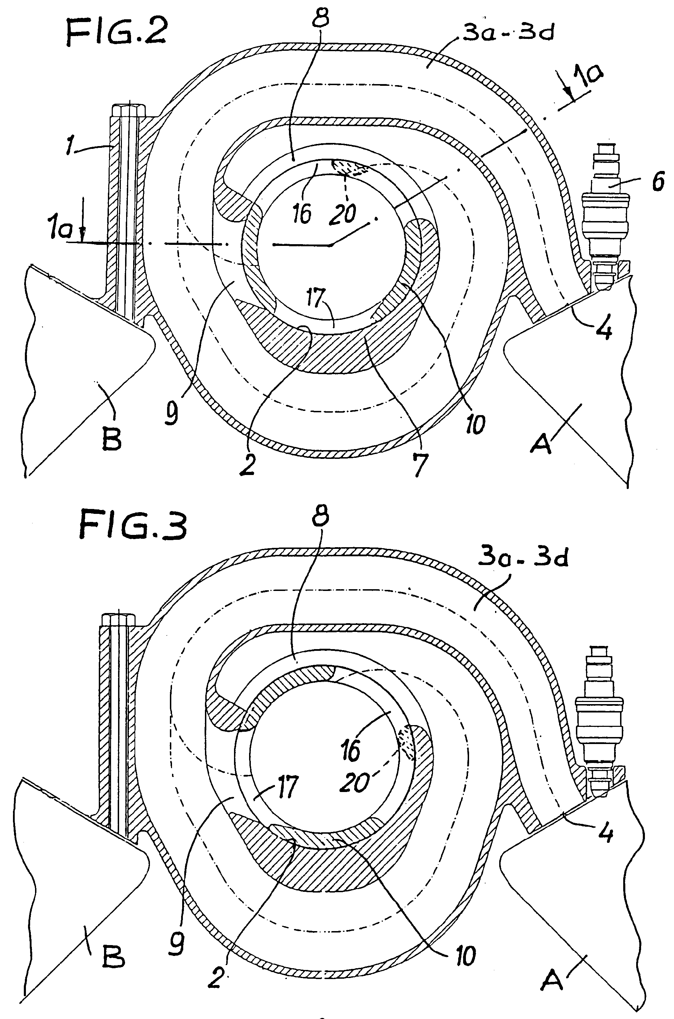

In den Zeichnungen ist eine Saugrohranlage für eine V8-Brennkraftmaschine dargestellt, die ein Guß-Gehäuse 1 mit einem rohrförmigen Ansaugverteilerraum 2 und zu den einzelnen Zylindern führende Einzelsaugrohre 3a bis 3h aufweist. Dabei sind die ersten Einzelsaugrohre 3a - 3d den Zylindern der ersten Zylinderreihe A und die zweiten Einzelsaugrohre 3e - 3h den Zylindern der zweiten Zylinderreihe B zugeordnet, wie dies aus Fig. 2 bis 5 ersichtlich ist. Die Einzelsaugrohre sind in Längsrichtung des Ansaugverteilerraumes 2 nebeneinander angeordnet und um diesen herumgeführt, wobei die ersten Einzelsaugrohre 3a - 3d im Uhrzeigersinn und die zweiten Einzelsaugrohre 3e - 3h entgegen dem Uhrzeigersinn verlaufen. Die ersten Einzelsaugrohre 3a - 3d enden in einen Flansch 4, der auf den Zylinderkopf der Zylinderreihe A aufgeschraubt ist, und die zweiten Einzelsaugrohre 3e - 3h enden in einem Flansch 5, der auf den Zylinderkopf der Zylinderreihe B aufgeschraubt ist. In den Flanschen 4 und 5 ist für jedes Einzelsaugrohr ein Kraftstoff-Einspritzventil 6 befestigt.

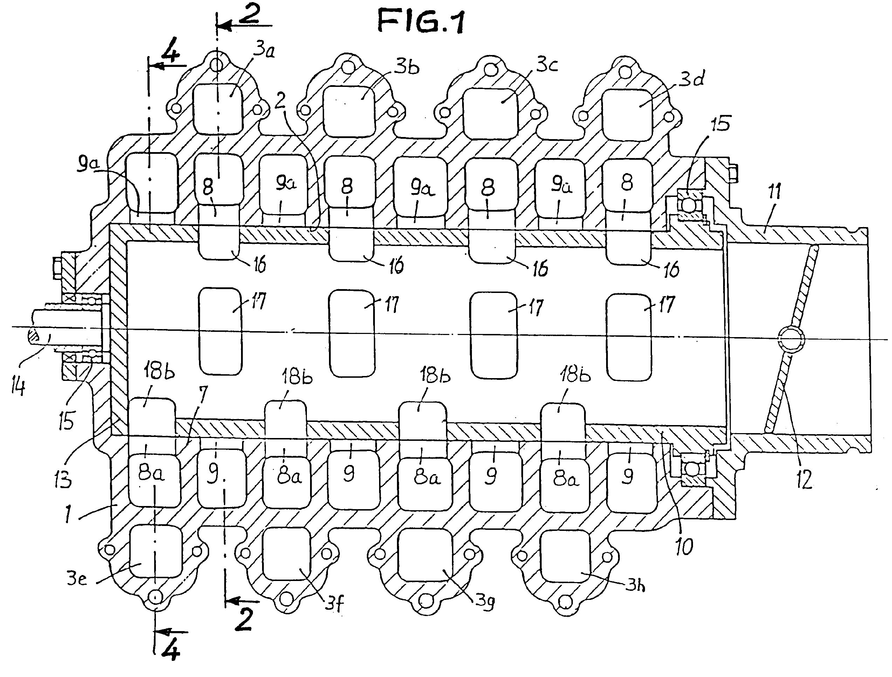

In der Wand 7 des Ansaugverteilerraumes 2 sind für die ersten Einzelsaugrohre 3a-3d jeweils zwei Öffnungen 8 und 9 und für die zweiten Einzelsaugrohre 3e-3h jeweils zwei Öffnungen 8a und 9a vorgesehen, die in einem Winkelabstand voneinander angeordnet sind und von denen die erste Öffnung 8 bzw. 8a am Anfang des Einzelsaugrohres und die zweite Öffnung 9 bzw. 9a etwa in der Mitte zwischen dem Anfang und dem Ende des Einzelsaugrohres am Flansch 4 bzw. 5 liegt. Dadurch lassen sich zwei unterschiedliche Schwingrohrlängen verwirklichen, und zwar eine lange Schwingrohrlänge zur Erzielung eines hohen Drehmoments im unteren bis mittleren Drehzahlbereich der Brennkraftmaschine, indem die zweiten Öffnungen 9 und 9a abgesperrt werden, und eine kurze Schwingrohrlänge für hohe Leistung im oberen Drehzahlbereich, indem die zweiten Öffnungen 9 und 9a freigegeben werden. Zu diesem Zweck ist der Ansaugverteilerraum 2 mit einem kreisförmigen Querschnitt ausgebildet und es ist in ihm ein rohrförmiger, sich im wesentlichen über die ganze Länge des Ansaugverteilerraumes 2 erstreckender Drehschieber 10 angeordnet, der an eine Ansaugleitung 11 (Fig. 1) angeschlossen ist, die an eine Stirnseite des Gehäuses 1 angeschraubt ist und eine willkürlich betätigbare Drosselklappe 12 aufweist. Der Drehschieber 10 ist an seinem von der Ansaugleitung 11 abgewandten Ende durch eine Stirnwand 13 geschlossen. Von der Stirnwand 13 erstreckt sich eine Welle 14 nach außen, an welcher ein nicht dargestelltes Betätigungsglied angreift, mit dem der Drehschieber 10 in Abhängigkeit von Betriebsparametern zwischen einer ersten und einer zweiten Stellung verdrehbar ist. Der Drehschieber 10 ist über Lager 15 drehbar im Gehäuse 1 gelagert.

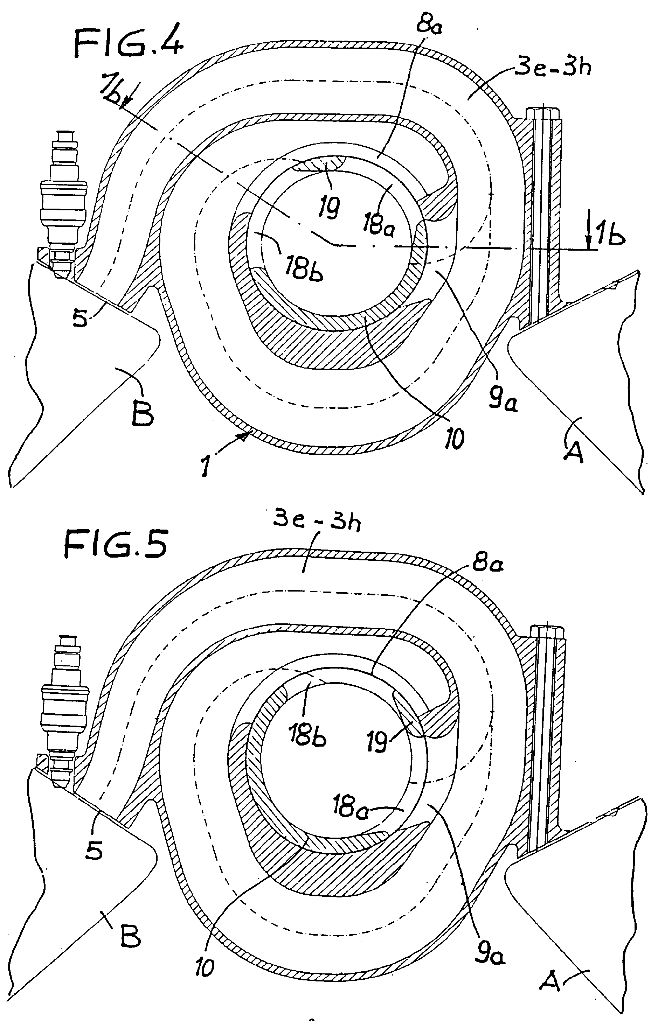

In der Wand des Drehschiebers 10 sind für jedes erste Einzelsaugrohr 3a-3d zwei sich in Umfangsrichtung erstreckende Steuerschlitze 16 und 17 vorgesehen, von denen der Steuerschlitz 16 in der in Fig. 2 dargestellten ersten Endstellung des Drehschiebers 10 mit der eisten Öffnung 8 in Verbindung steht, während die zweite Öffnung 9 von der Wand des Drehschiebers 10 abgedeckt ist. Für jedes zweite Einzelsaugrohr 3e-3h ist in der Wand des Drehschiebers 10 ein einziger Stzeuerschlitz 18 vorgesehen, der in der ersten Endstellung des Drehschiebers 10 (Fig. 4) mit der ersten Öffnung 8a in Verbindung steht, während die zweite Öffnung 9a abgedeckt ist. In dieser Stellung des Drehschiebers ist somit die große Schwingrohrlänge verwirklicht. Wenn der Drehschieber 10 im Uhrzeigersinn in seine zweite, in Fig. 3 und 5 dargestellte Stellung gedreht wird, ist der zweite Steuerschlitz 17 mit der zweiten Öffnung 9 und der Steuerschlitz 18 mit der zweiten Öffnung 9a in Verbindung. Der erste Steuerschlitz 16 und der Steuerschlitz 18 sind jedoch so bemessen, daß sie auch in der zweiten Stellung des Drehschiebers die erste Öffnung 8 bzw. 8a noch teilweise freigeben, auch wenn der Hauptstrom (ca. 80%) durch die zweite Öffnung 9 bzw. 9a in das Einzelsaugrohr eintritt und hierdurch die kleine Schwingrohrlänge verwirklicht ist. Dadurch, daß der Öffnungsquerschnitt der ersten Öffnung in dem gleichen Maße verkleinert wird wie der Öffnungsquerschnitt der zweiten Öffnung vergrößert wird, wird eine Querschnittsverringerung beim Umschalten des Drehschiebers von der ersten in die zweite Stellung vermieden.

Da die Steuerschlitze 18 für die zweiten Einzelsaugrohre zur Erzielung der gleichen Steuerzeiten wie für die ersten Einzelsaugrohre verhältnismäßig lang sein müssen, ist es aus Festigkeitsgründen zweckmäßig, diese Steuerschlitze jeweils durch einen sich in Achsrichtung erstreckenden Steg 19 in zwei Teilschlitze 18a, 18b aufzuteilen, wobei der Steg so angeordnet ist, daß die Größe des Teilschlitzes 18a der Größe der zweiten Öffnung 9a entspricht. Der Steg 19 trägt auch dazu bei, in der zweiten Stellung des Drehschiebers (Fig. 5) ein störungsfreies Einströmen in das Einzelsaugrohr 3e - 3h durch die zweite Öffnung 9a zu ermöglichen, da in dieser Stellung (hohe Leistung) eine optimale Strömung besonders wichtig ist.

Zur Erzielung einer höheren Festigkeit und aus Symmetriegründen kann der erste Steuerschlitz 16 ebenfalls mit einem sich in Achsrichtung erstreckenden, gestrichelt eingezeichneten Steg 20 in zwei Teilschlitze aufgeteilt werden, wobei dieser Steg so zu legen ist, daß er in der zweiten Stellung des Drehschiebers gemäß Fig. 3 der Einströmquerschnitt in die erste Öffnung 8 nicht vermindert. Die Form des Steges 20 ist so gewählt, daß in der zweiten Stellung (Fig. 3) ein optimales Einströmen in die erste Öffnung 8 des Einzelsaugrohres 3a - 3d erzielt wird.

Durch die dargestellte unterschiedliche Ausbildung der Steuerschlitze für die Öffnungen der ersten und der zweiten Einzelsaugrohre gelingt es, trotz der im wesentlichen spiegelbildlichen Anordnung dieser Öffnungen mit einem gemeinsamen Drehschieber gleiche Steuerzeiten und -querschnitte für beide Saugrohr-Gruppen 3a-3d und 3e-3h zu verwirklichen.

## Patentansprüche

1. Saugrohranlage für eine Mehrzylinder-Brennkraftmaschine mit zwei Zylinderreihen in V-Anordnung,
- mit einem rohrförmigen Ansaugverteilerraum (2)
- mit zu den Zylindern der ersten Zylinderreihe (A) führenden ersten Einzelsaugrohren (3a-3d) und zu den Zylindern der zweiten Zylinderreihe (B) führenden zweiten Einzelsaugrohren (3e-3h), die in Längsrichtung des Ansaugverteilerraumes (2) nebeneinander angeordnet sind, wobei sich die ersten Einzelsaugrohre (3a-3d) im Uhrzeigersinn und die zweiten Einzelsaugrohre (3e-3h) entgegen dem Uhrzeigersinn um den Ansaugverteilerraum erstrecken und mit dem Ansaugverteilerraum (2) jeweils über eine erste und eine zweite Öffnung (8, 8a bzw. 9, 9a) in Verbindung stehen, die in einem Winkelabstand in der Wand (7) des Ansaugverteilerraumes (2) angeordnet sind und von denen die zweite Öffnung (9, 9a) von einem Ventilglied (10) beherrscht ist, das in Abhängigkeit von Betriebsparametern die zweite Öffnung zur Erzielung einer großen Schwingrohrlänge absperrt und zur Erzielung einer kleinen Schwingrohrlänge freigibt,
**dadurch gekennzeichnet,** daß
a) der Ansaugverteilerraum (2) einen kreisförmigen Querschnitt hat und das Ventilglied (10) von einem im Ansaugverteilerraum angeordneten, sich im wesentlichen über dessen ganze Länge erstreckenden Drehschieber gebildet ist, der zwischen einer ersten und einer zweiten Stellung verdrehbar und an eine Ansaugleitung (11) angeschlossen ist,
b) die beiden Öffnungen (8, 9) der ersten Einzelsaugrohre im wesentlichen spiegelbildlich zu den beiden Öffnungen (8a, 9a) der zweiten Einzelsaugrohre angeordnet sind, und
c) in der Wand des Drehschiebers (10) für die Öffnungen (8, 9) jedes ersten Einzelsaugrohres (3a-3d) erste und zweite Steuerschlitze (16, 17) und für die Öffnungen (8a, 9a)) jedes zweiten Einzelsaugrohres (3e - 3h) ein gemeinsamer Steuerschlitz (18) vorgesehen ist,
wobei die Anordnung so getroffen ist, daß in der ersten Stellung des Drehschiebers (10) die zweite Öffnung (9 bzw. 9a) jedes Einzelsaugrohres abgesperrt und die erste Öffnung (8 bzw. 8a) von dem ersten Steuerschlitz (16) bzw. von dem gemeinsamen Steuerschlitz (18) freigegeben ist und in der zweiten Stellung die zweiten Steuerschlitze (17) die zweiten Öffnungen (9) der ersten Einzelsaugrohre (3a - 3d) ganz und die ersten Steuerschlitze (16) die ersten Öffnungen (8) der ersten Einzelsaugrohre (3a - 3d) teilweise freigeben und die gemeinsamen Steuerschlitze (18) die zweiten Öffnungen (9a) der zweiten Einzelsaugrohre (3e - 3h) ganz und die ersten Öffnungen (8a) teilweise freigeben.

2. Saugrohranlage nach Anspruch 1, dadurch gekennzeichnet, daß der gemeinsame Steuerschlitz (18) jeweils durch einen Steg (19) in zwei Teilschlitze (18a, 18b) unterteilt ist, wobei der Steg so angeordnet ist, daß ein Teilschlitz (18a) der Größe der zweiten Öffnung (9a) entspricht und die freien Querschnitte der Teilschlitze (18a und 18b) (Fig. 4) dem Querschnitt des Steuerschlitzes (16) (Fig.2) entsprechen, und die Form des Steges so gestaltet ist, daß in der zweiten Stellung des Drehschiebers (10) (Fig. 5) ein möglichst wirbelfreies Einströmen in die zweite Öffnung (9a) erreicht ist.

3. Saugrohranlage nach Anspruch 1 oder 2, dadurch gekennzeichnet, daß die ersten Steuerschlitze (16) jeweils durch einen Steg (20) in zwei Teilschlitze unterteilt sind, der so angeordnet und ausgebildet ist, daß er in der zweiten Stellung (Fig. 3) des Drehschiebers (10) im Wandbereich des Ansaugverteilerraumes (2) liegt und an die benachbarte Kante der Öffnung (8) strömungsgünstig anschließt.

## Claims

1. Suction pipe arrangement for a multicylinder internal combustion engine with two banks of cylinders in V formation.
- with a tubular intake manifold chamber (2)
- with first individual suction pipes (3a to 3d) leading to the cylinders of the first bank of cylinders (A) and with second individual suction pipes (3e to 3h) leading to the cylinders of the second bank of cylinders (B), which are arranged next to one another in the longitudinal direction of the intake manifold chamber (2), the first individual suction pipes (3a to 3d) extending in the clockwise direction and the second individual suction pipes (3e to 3h) extending in the counterclockwise direction about the intake manifold chamber and being in communication with the intake manifold chamber (2) in each case by way of a first and a second opening (8, 8a or 9, 9a), which are disposed spaced apart at a given angle in the wall (7) of the intake manifold chamber (2) and of which the second opening (9, 9a) is controlled by a valve element (10), which, depending on the operating parameters, closes off the second opening to achieve a large ram pipe length and opens it to achieve a small ram pipe length, characterized in that
(a)the intake manifold chamber (2) has a circular cross section and the valve element (1) is formed by a rotary valve, which is disposed in the intake manifold chamber, extends essentially over the whole length of this chamber and is rotatable between a first and a second position and is connected to a suction line (11),
(b)the two openings (8, 9) of the first individual suction pipes are disposed essentially in mirror image fashion to the two openings (8a, 9a) of the second individual suction pipes and
(c)in the wall of the rotary valve (10), first and second control slits (16, 17) are provided for the openings (8, 9) of each first individual suction pipe (3a to 3d) and a common control slit (18) is provided for the openings (8a, 9a) of each second individual suction pipe (3e to 3h),
the arrangement being made so that, in the first position of the rotary valve (10), the second opening (9 or 9a) of each individual suction pipe is closed off and the first opening (8 or 8a) is freed by the first control slit (16) or by the common control slit (18) respectively and, in the second position, the second control slits (17) free the second openings (9) of the first individual suction pipes (3a to 3d) completely and the first control slits (16) free the first openings (8) of the first individual suction pipes (3a to 3d) partially and the common control slits (18) free the second openings (9a) of the second individual suction pipes (3e to 3h) completely and the first openings (8a) partly.

2. The suction pipe arrangement of claim 1, characterized in that each common control slit (18) is divided by a web (19) into two partial slit (18a, 18b), the web being disposed so that a partial slit (18a) corresponds to the size of the second opening (9a) and the free cross sections of the control slits (18a and 18b) (Figure 4) correspond to the cross section of the control slit (16) (Figure 2), and the shape of the web being designed so that, in the second position of the rotary valve (10) (Figure 5), the flow into the second opening (9a) is as free of eddies as possible.

3. The suction pipe arrangement of claims 1 or 2, characterized in that each first control slit (16) is subdivided by a web (20) into two parial slits, the web (20) being disposed and constructed so that, in the second position (figure 3) of the rotary valve (10), it lies in the wall region of the intake manifold chamber (2) and adjoins the adjacent edge of the opening (8) in such a manner as to favor the flow.

## Revendications

1. Agencement de collecteur d'admission pour un moteur à combustion interne polycylindrique à deux rangées de cylindres disposées en V,
- avec une enceinte de répartition de l'admission (2) tubulaire
- avec des premiers tubes d'admission individuels (3a à 3d), menant aux cylindres de la première rangée de cylindres (A) et des deuxièmes tubes d'admission individuels (3e à 3h), menant aux cylindres de la deuxième rangée de cylindres (B), disposés les uns à côté des autres dans la direction longitudinale de l'enceinte de répartition de l'admission (2), où les premiers tubes d'admission individuels (3a à 3d) s'étendent dans le sens des aiguilles d'une montre et les deuxièmes tubes d'admission individuels (3e à 3h) s'étendant dans le sens inverse des aiguilles d'une montre, autour de l'enceinte de répartition de l'admission et sont chaque fois reliés à l'enceinte de répartition de l'admission (2) par l'intermédiaire d'une première et d'une deuxième ouverture (8,8a respectivement 9,9a), disposées selon un espacement angulaire dans la paroi (7) de l'enceinte de répartition de l'admission (2) et dont la deuxième ouverture (9,9a) est soumise à l'action d'un organe de soupape (10), qui, en fonction de paramètres de fonctionnement, obture la deuxième ouverture, en vue d'obtenir une grande longueur de tube pulsatoire et dégage la deuxième ouverture en vue d'obtenir une plus petite longueur de tube pulsatoire,
caractérisé en ce que
a) l'enceinte de répartition de l'admission (2) présente une section transversale circulaire et l'organe de soupape (10) est formé par un registre rotatif, disposé dans l'enceinte de répartition de l'admission et s'étendant pratiquement sur toute sa longueur et étant susceptible de tourner, entre une première position et une deuxième position et étant raccordé à une conduite d'admission (11),
b) les deux ouvertures (8,9) des premiers tubes d'admission individuels sont disposés pratiquement suivant une symétrie spéculaire par rapport aux deuxièmes ouvertures (9a,9a) des deuxièmes tubes d'admission individuels, et
c) des premières et des deuxièmes fentes de commande (16,17) sont prévues dans la paroi du registre rotatif (10), pour les ouvertures (8,9) de chacun des premiers tubes d'admission individuels (3a à 3d) et une fente de commande (18) commune est prévue dans la paroi du registre rotatif (10), pour les ouvertures (8a,9a) de chacun des deuxièmes tubes d'admission individuels (3e à 3h),
où l'agencement est réalisé de telle façon que, dans la première position du registre rotatif (10), la deuxième ouverture (9 respectivement 9a) de chaque tube d'admission individuel est obturée et la première ouverture (8 respectivement 8a) venant de la première fente de commande (16) respectivement de la fente de commande (18) commune est dégagée et que, dans la deuxième position, les deuxièmes fentes de commande (17) dégagent totalement les deuxièmes ouvertures (9) des premiers tubes d'admission individuels (3a à 3d) et les premières fentes de commande (16) dégagent partiellement les premières ouvertures (8) des premiers tubes d'admission individuels (3a à 3d) et les fentes de commande (18) communes dégagent totalement les deuxièmes ouvertures (9a) des deuxièmes tubes d'admission individuels (3e à 3h) et dégagent partiellement les premières ouvertures (8a).

2. Agencement de collecteur d'admission selon la revendication 1, caractérisé en ce que la fente de commande (18) commune est chaque fois subdivisée, par une nervure (19), en deux fentes partielles (18a,18b), la nervure étant disposée de telle façon qu'une fente partielle (18a) correspond à la taille de la deuxième ouverture (9a) et que les sections transversales libres des fentes partielles (18a et 18b) (figure 4) correspondent à la section transversale de la fente de commande (16) (figure 2), et la forme de la nervure étant d'allure telle que, dans la deuxième position du registre rotatif (10) (figure 5), on obtient un écoulement d'admission aussi exempt que possible de tourbillons dans la deuxième ouverture (9a).

3. Agencement de collecteur d'admission selon la revendication 1 ou 2, caractérisé en ce que les premières fentes de commande (16) sont chacune subdivisées, par une nervure (20), en deux fentes partielles, la nervure (20) étant disposée et réalisée de telle façon que, dans la deuxième position (figure 3) du registre rotatif (10), elle se situe dans la zone de paroi de l'enceinte de répartition de l'admission (2) et que l'arête voisine de l'ouverture (8) est raccordée de façon aérodynamiquement favorable.
